# EUROPEAN PATENT SPECIFICATION

(11) **EP 0 990 803 B1**
(45) Date of publication and mention of the grant of the patent: **16.07.2003**
(21) Application number: 99307036.6
(22) Date of filing: 03.09.1999
(51) Int. Cl.: F16B 5/06, F16B 2/24

(54) **Latch**
Verriegelungsvorrichtung
Dispositif de verrouillage

(30) Priority: 30.09.1998 GB 9821184
(43) Date of publication of application: 05.04.2000
(73) Proprietor: McKechnie UK Limited, Walsall, West Midlands WS9 8DS (GB)
(72) Inventor: Taylor, Kenneth, Aldershot, Hampshire GU11 3HH (GB)
(74) Representative: Haley, Stephen

(56) References cited:
- GB-A- 598 841
- US-A- 3 459 094
- US-A- 4 019 764
- US-A- 4 745 666

## Description

This invention relates to a latch for releasably holding two elements, such as panels, together.

Over the years a considerable number of latching mechanisms have been produced for allowing the latching of two or more elements together as, e.g., document GB-A-598841. Often, however, such latches are costly and difficult to manufacture, are difficult to install and operate and/or are difficult to release. Furthermore, it is not uncommon for such prior art latches to have little or no resilience, so that vibration breaks them or releases them unnecessarily.

According to the present invention there is provided a latch for latching two elements, the latch comprising:
a first member arranged to pass, in use, partially through an aperture formed through the two elements and having a retaining portion for engaging a surface of one of the two elements in use, the first member having an aperture formed therein and a retaining lug for engaging a surface of the other of the two elements in use; and
a second member arranged to pass through the aperture in the first latching member in use, the second member having a retaining portion for engaging a surface of the retaining portion of the first member, a retaining lug for engaging a surface of the other two elements in use, and a sprung barb for retaining the second member in the aperture in the first member when inserted therein to thereby hold the latch in a closed position.

The aperture in the first member may be configured so that access to the sprung barb can be made via the aperture so that a tool can be inserted through the aperture in order to release the barb and remove the second member from the first member. The retaining lugs on the first and second members may be sprung in order to provide the latch with vibration resistant compliance in use. A second sprung barb may be provided on the second member in order to provide a stronger latch.

The first member may have a second aperture through which a portion of the second member can pass in use.

The first and second members may be formed from metal, such as sprung steel.

One example of the present invention will now be described with reference to the accompanying drawings, in which:
Figure 1 is a plan perspective view of an example latch according to the present invention; and
Figures 2A to 2C are side views of the latch of figure 1 at various stages during installation of the latch.

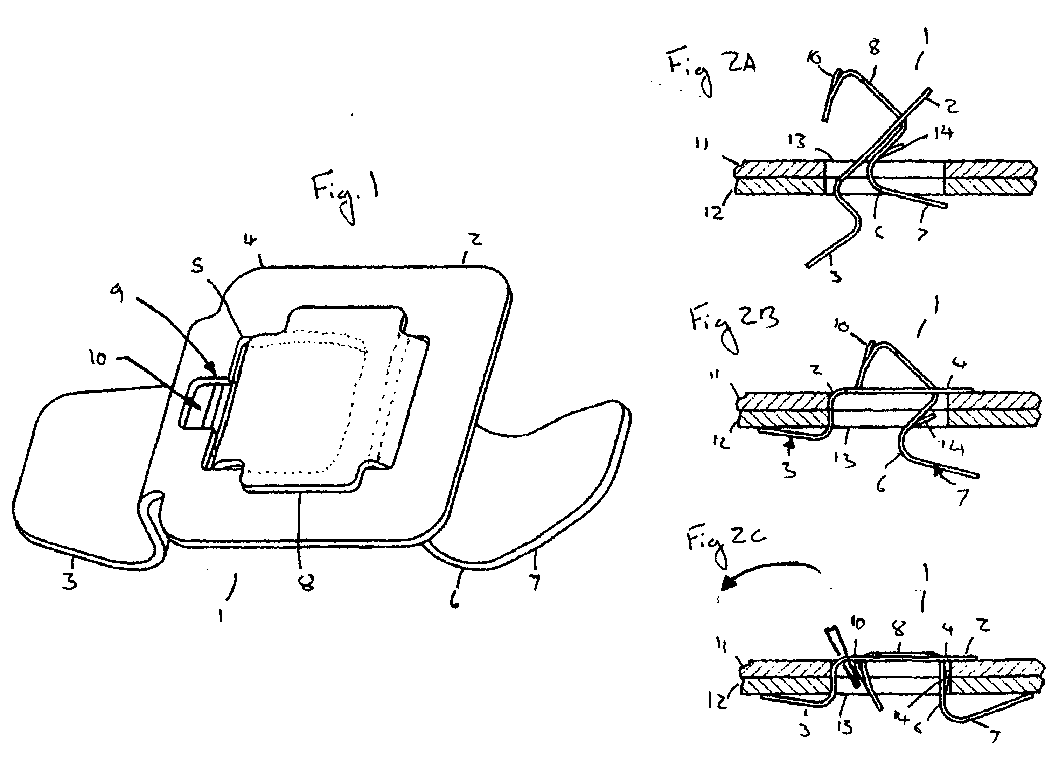

Referring to figure 1, a latch 1 according to the present invention has a first member 2 comprising a retaining lug 3 and a retaining portion 4. Formed in the retaining portion 4 is an aperture 5 through which a second member 6 can pass in use. The second member 6 has a retaining lug 7 and a retaining portion 8 which ensures that the second member 6 does not pass completely through the aperture 5 in use. The aperture 5 has a cut away portion 9 through which a release tool (not shown) can be inserted in use to gain access to a sprung barb 10 on the second member 6.

The operation of the latch 1 will now be described with reference to figures 2A to 2C, in which components corresponding to those shown in figure 1 are numbered identically. Two elements 11, 12 (in this case panels) to be latched together are placed adjacent to one another such that apertures formed therein form a single aperture 13. The latch 1 is passed through the aperture 13 in an opened state, with the second member 6 placed within the first member 2. The retaining portion 4 of the first member 2 engages with a surface of the element 11, and the first member 2 is pivoted until its retaining lug 3 engages with the surface of the second element 12. The second member 6 is then pivoted within the first member 2 until its retaining lug 7 engages also with the surface of the second element 12. At this time, the second member 6 is prevented from passing completely through the first member 2 by its retaining portion 8, and the sprung barb 10 passes through the aperture 5 and then moves to engage with the surface of the first member which is facing the aperture 13. The latch 1 is then in a closed position. A second sprung barb 14 locates the latch 1 in the aperture 13 by preventing movement of the elements 11, 12.

If removal of the latch 1 is required, a tool can be inserted in the recess portion 9 of the aperture 5 and pivoted in the direction of arrows shown in figure 2C. The sprung barb 10 is drawn out of engagement with the first member 2 and the first member 2 and second member 6 can be pivoted with respect to one another and the elements 11 and 12 to remove the latch 1.

It will be appreciated that the retaining lug 3, 7 of the first and second members 2, 6 are formed so that they provide a sprung retention in order to absorb vibration.

## Claims

1. A latch (1) for latching two elements (11, 12), the latch (1) comprising:
a first member (2) arranged to pass, in use, partially through an aperture (13) formed through the two elements (11, 12) and having a retaining portion (4) for engaging a surface of one of the two elements (11, 12) in use, the first member (2) having an aperture (5) formed therein and a retaining lug (3) for engaging a surface of the other of the two elements (11, 12) in use; and
a second member (6) arranged to pass through the aperture (5) in the first latching member (2) in use, the second member (6) having a retaining portion (8) for engaging a surface of the retaining portion (4) of the first member (2), a retaining lug (7) for engaging a surface of the other two elements (11, 12) in use, and a sprung barb (10) for retaining the second member (6) in the aperture (13) in the first member (2) when inserted therein to thereby hold the latch (1) in a closed position.

2. A latch (1) according to claim 1, wherein the aperture (13) in the first member (2) is configured so that access to the sprung barb (10) can be made via the aperture (13) so that a tool can be inserted through the aperture (13) in order to release the barb (10) and remove the second member (6) from the first member (2).

3. A latch (1) according to claim 1 or claim 2, wherein the retaining lugs (3, 7) on the first and second members (2, 6) are sprung.

4. A latch (1) according to any of claims 1 to 3, wherein a second sprung barb (14) is provided on the second member (6).

5. A latch (1) according to any of claims 1 to 4, wherein the first and second members (2, 6) are formed from metal, such as sprung steel.

6. A latch (1) according to any of claims 1 to 5, wherein the first member (2) has a second aperture through which a portion of the second member (6) may pass in use.

## Patentansprüche

1. Riegel (1) zum Verriegeln zweier Elemente (11, 12), der Riegel (1) umfassend:
- ein erstes Element (2), das so angeordnet ist, dass es im Gebrauch teilweise durch eine Öffnung (13) gelangt, die durch die beiden Elemente (11, 12) ausgebildet ist, und einen Rückhalteteil (4) zum in Eingriff Kommen mit einer Oberfläche eines der beiden Elemente (11, 12) im Gebrauch, wobei im ersten Element (2) eine Öffnung (5) ausgebildet ist und es eine Rückhaltelasche (3) zum in Eingriff Kommen mit einer Oberfläche des anderen der beiden Elemente (11, 12) im Gebrauch aufweist; und
- ein zweites Element (6), das zum Gelangen durch die Öffnung (5) im ersten Verriegelungselement (2) im Gebrauch angeordnet ist, wobei das zweite Element (6) einen Rückhalteteil (8) zum in Eingriff Kommen mit einer Oberfläche des Rückhalteteils (4) des ersten Elements (2), eine Rückhaltelasche (7) zum in Eingriff Kommen mit einer Oberfläche der anderen beiden Elemente (11, 12) im Gebrauch und einen gefederten Widerhaken (10) zum Zurückhalten des zweiten Elements (6) in der Öffnung (13) im ersten Element (2), wenn es darin eingeführt ist, aufweist, um so den Riegel (1) in einer geschlossenen Position zu halten.

2. Riegel (1) nach Anspruch 1, bei dem die Öffnung (13) im ersten Element (2) so konfiguriert ist, dass ein Zugang zum gefederten Widerhaken (10) über die Öffnung (13) so gewährt werden kann, dass ein Werkzeug durch die Öffnung (13) eingeführt werden kann, um so den Widerhaken (10) zu lösen und das zweite Element (6) vom ersten Element (2) zu entfernen.

3. Riegel (1) nach Anspruch 1 oder Anspruch 2, bei dem die Rückhaltelaschen (3, 7) auf dem ersten und dem zweiten Element (2, 6) gefedert sind.

4. Riegel (1) nach einem der Ansprüche 1 bis 3, bei dem ein zweiter gefederter Widerhaken (14) auf dem zweiten Element (6) vorgesehen ist.

5. Riegel (1) nach einem der Ansprüche 1 bis 4, bei dem das erste und das zweite Element (2, 6) aus Metall, wie zum Beispiel aus Federstahl, hergestellt sind.

6. Riegel (1) nach einem der Ansprüche 1 bis 5, bei dem das erste Element (2) eine zweite Öffnung hat, durch welche im Gebrauch ein Teil des zweiten Elements (6) gelangen kann.

## Revendications

1. Verrou (1) pour verrouiller deux éléments (11, 12), le verrou (1) comprenant :
un premier élément (2) configuré de façon à passer, lors de l'utilisation, partiellement à travers une ouverture (13) formée à travers les deux éléments (11, 12), et comportant une partie de maintien (4) pour s'engager avec une surface de l'un des deux éléments (11, 12) lors de l'utilisation, le premier élément (2) comportant une ouverture (5) formée à l'intérieur de celui-ci et une patte de maintien (3) pour s'engager avec une surface de l'autre des deux éléments (11, 12) lors de l'utilisation ; et
un deuxième élément (6) configuré de façon à passer à travers la ou les ouverture(s) dans le premier élément de verrouillage (2) lors de l'utilisation, le deuxième élément comportant une partie de maintien (8) pour s'engager avec une surface de la partie de maintien (4) du premier élément (2), une patte de maintien (7) pour s'engager avec une surface des deux autres éléments (11, 12) lors de l'utilisation, et une barbe élastique (10) pour maintenir le deuxième élément (6) dans l'ouverture (13) dans le premier élément (2) lorsqu'il est inséré dans celle-ci, de façon à maintenir par conséquent le verrou (1) dans une position fermée.

2. Verrou (1) selon la revendication 1, dans lequel l'ouverture (13) dans le premier élément (2) est configurée de telle sorte que l'accès à la barbe élastique (10) puisse être réalisé par l'intermédiaire de l'ouverture (13), de telle sorte qu'un outil puisse être inséré à travers l'ouverture (13) de façon à libérer la barbe (10) et à retirer le deuxième élément (6) du premier élément (2).

3. Verrou (1) selon la revendication 1 ou la revendication 2, dans lequel les pattes de maintien (3, 7) sur les premier et deuxième éléments (2, 6) sont élastiques.

4. Verrou (1) selon l'une quelconque des revendications 1 à 3, dans lequel une deuxième barbe élastique (14) est disposée sur le deuxième élément (6).

5. Verrou (1) selon l'une quelconque des revendications 1 à 4, dans lequel les premier et deuxième éléments (2, 6) sont constitués en métal, par exemple en acier à ressort.

6. Verrou (1) selon l'une quelconque des revendications 1 à 5, dans lequel le premier élément (2) comporte une deuxième ouverture à travers laquelle une partie du premier élément (6) peut passer lors de l'utilisation.
